# EUROPEAN PATENT SPECIFICATION

(11) **EP 3 632 664 B1**
(45) Date of publication and mention of the grant of the patent: **30.12.2020**
(21) Application number: 19200403.4
(22) Date of filing: 30.09.2019
(51) Int. Cl.: B29D 30/00, B29D 30/06

(54) **TIRE AND TIRE MANUFACTURING METHOD**
REIFEN UND REIFENHERSTELLUNGSVERFAHREN
PROCÉDÉ DE FABRICATION DE PNEU ET PNEU

(30) Priority: 03.10.2018 JP 2018188132
(43) Date of publication of application: 08.04.2020
(73) Proprietor: Toyo Tire Corporation, Itami-shi, Hyogo 664-0847 (JP)
(72) Inventor: HOSOMI, Kazumasa, Itami-shi, Hyogo 664-0847 (JP)
(74) Representative: Müller-Boré & Partner Patentanwälte PartG mbB

(56) References cited:
- EP-A1- 1 589 614
- WO-A1-2011/002440
- JP-A- 2017 132 291

## Description

### BACKGROUND OF THE INVENTION

### Field of the Invention

The present invention relates to a tire in which an electronic component is embedded, and a tire manufacturing method.

### Related Art

Conventionally, a tire embedding an electronic component such as an RFID tag has been known. With such a tire, it is possible to carry out production management of the tire, usage history management, etc. by the RFID tag embedded in the tire and a reader as external equipment carrying out communication. For example, Patent Document 1 discloses a tire embedding an RF tag in the vicinity of a stiffener.

Patent Document 1: Japanese Unexamined Patent Application, Publication No. 2016-37236

Patent document EP 1 589 614 A1 calls for an electronic device to be positioned between the carcass and any of the inner liner, side wall or belt package of a tyre.

### SUMMARY OF THE INVENTION

However, when embedding an RFID tag inside of a tire as in the technology illustrated in Patent Document 1, since a level difference arises due to the RFID tag, there has been concern over the uniformity deteriorating.

The present invention has been made taking account of the above-mentioned problem, and an object thereof is to provide a tire having favorable uniformity even in the case of embedding an electronic component such as an RFID tag inside of the tire.

A tire (for example, the tire 1) according to a first aspect of the present invention includes: a plurality of ring-shaped tire structures (for example, the bead filler 22 and carcass ply 23) which constitute a tire, and a ring-shaped rubber sheet (for example, the rubber sheet 45) which is integrated with an electronic component (for example, the RFID tag 40), in which the ring-shaped rubber sheet which is integrated with the electronic component is disposed between the plurality of ring-shaped tire structures.

According to a second aspect of the present invention, the tire as described in the first aspect may further include: a bead (for example, the bead 11) having a bead core (for example, the bead core 21) and a bead filler (for example, the bead filler 22) which extends to an outer-side in a tire-radial direction of the bead core, in which the rubber sheet is provided to the bead filler as the ring-like tire structure.

According to a third aspect of the present invention, in the tire as described in the second aspect, a recess (for example, the ring-shaped recess 22B) extending in a circumferential direction may be formed in a surface of the bead filler, and the ring-shaped rubber sheet may be provided in the recess.

According to a fourth aspect of the present invention, in the tire as described in the third aspect, the bead filler may be provided with the recess is molded using an extrusion molding process.

A manufacturing method of a tire according to a fifth aspect of the present invention includes a step of disposing a ring-shaped rubber sheet which is integrated with an electronic component at a bead filler which extends to an outer side in a tire-radial direction of a bead core. According to a sixth aspect of present invention, in the manufacturing method of a tire according to fifth aspect, the tire may include a bead having a bead core and a bead filler extending to an outer side in a tire-radial direction of the bead core, wherein the method further may comprise the steps of: forming a recess extending in a circumferential direction in a surface of the bead filler; and disposing, wherein the step of disposing is a step of disposing a ring-shaped rubber which is integrated with an electronic component, in the recess extending in the circumferential direction.

According to the present invention, it is possible to prevent problems such as a level difference arising around an electronic component and uniformity deterioration, even in a case of embedding an electronic component, by configuring so as to embed the electronic component in a ring-shaped rubber sheet, and provided this rubber sheet within the structure of the tire. Consequently, it becomes possible to provide with certainty a tire having high confidence which is high quality.

### BRIEF DESCRIPTION OF THE DRAWINGS

FIG. 1 is a view showing a half section in a tire-width direction of a tire according to an embodiment of the present invention;
FIG. 2 is a partially enlarged cross-sectional view of the tire in FIG. 1;
FIG. 3 is a view showing a ring-shaped rubber sheet possessed by a tire according to an embodiment of the present invention and an RFID tag embedded therein;
FIG. 4 is a view of a modified example of the tire according to an embodiment of the present invention, and shows a half section in a tire-width direction; and
FIG. 5 is a partially enlarged cross-sectional view of the tire in FIG. 4.

### DETAILED DESCRIPTION OF THE INVENTION

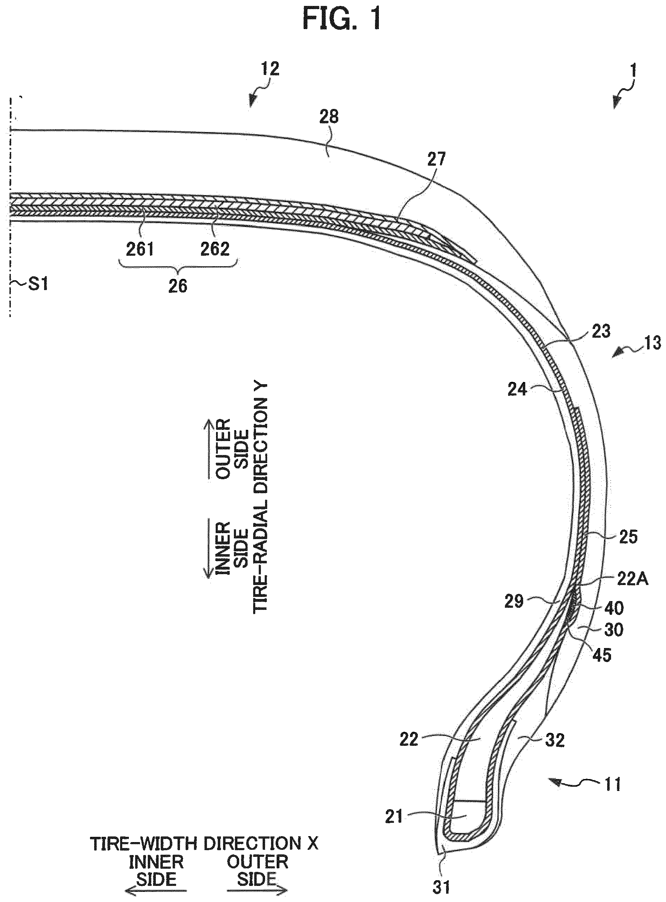

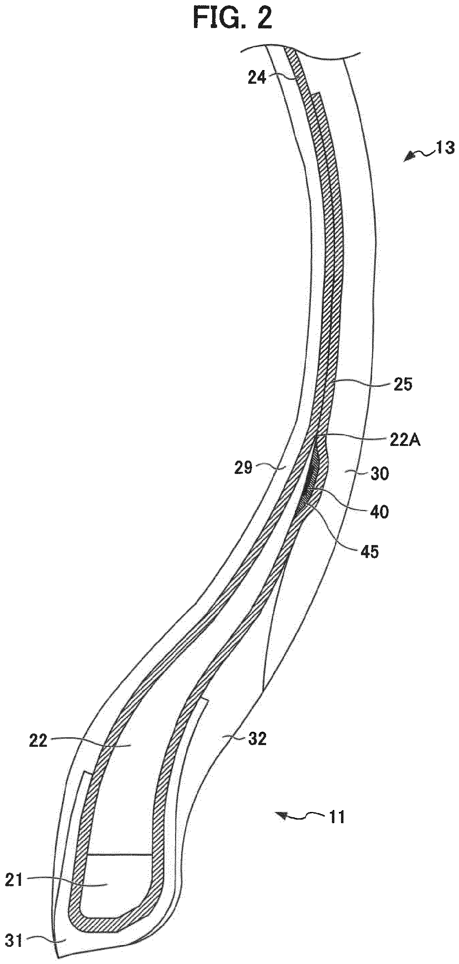

Hereinafter, an embodiment of the present invention will be explained while referencing the drawings. FIG. 1 is a view showing a half section in a tire-width direction of a tire 1 according to the present embodiment. The basic structure of the tire is left/right symmetric in the cross section of the tire-width direction; therefore, a cross-sectional view of the right half is shown herein. In the drawings, the reference symbol S1 is the tire equatorial plane. The tire equatorial plane S1 is a plane orthogonal to the tire rotation axis, and is positioned in the center of the tire-width direction. Herein, tire-width direction is a direction parallel to the tire rotation axis, and is the left/right direction of the paper plane of the cross-sectional view in FIG. 1. In FIG. 1, it is illustrated as the tire-width direction X. Then, inner side of tire-width direction is a direction approaching the tire equatorial plane S1, and is the left side of the paper plane in FIG. 1. Outer side of tire-width direction is a direction distancing from the tire equatorial plane S1, and is the right side of the paper plane in FIG. 1. In addition, tire-radial direction is a direction perpendicular to the tire rotation axis, and is the vertical direction in the paper plane of FIG. 1. In FIG. 1, it is illustrated as the tire-radial direction Y. Then, outer side of tire-radial direction is a direction distancing from the tire rotation axis, and is the upper side of the paper plane in FIG. 1. Inner side of tire-radial direction is a direction approaching the tire rotation axis, and is the lower side of the paper plane in FIG. 1. The same also applies to FIGS. 2, 4 and 5.

The tire 1 is a tire for passenger cars, for example, and includes a pair of beads 11 provided at both sides in the tire-width direction, a tread 12 forming the contact patch with the road surface, and a pair of side walls 13 extending between the pair of beads 11 and the tread 12, as shown in FIG. 1.

The bead 11 includes an annular bead core 21 formed by wrapping around several times bead wires made of metal coated with rubber, and a bead filler 22 of tapered tip shape extending to the outer side in the tire-radial direction of the bead core 21. The bead core 21 is a member which plays a role of fixing a tire filled with air to the rim of a wheel which is not illustrated. The bead filler 22 is a member provided in order to raise the rigidity of the bead peripheral part and to ensure high maneuverability and stability, and is configured from rubber of a higher modulus than the surrounding rubber members, for example.

A carcass ply 23 constituting a ply serving as the skeleton of the tire is embedded inside of the tire 1. The carcass ply 23 extends from one bead core to the other bead core. In other words, it is embedded in the tire 1 between the pair of bead cores 21, in a form passing through the pair of side walls 13 and the tread 12.

The carcass ply 23 includes a ply body 24 which extends from one bead core to the other bead core, and extends between the tread 12 and bead 11, and a ply folding part 25 which is folded around the bead core 21. The carcass ply 23 is configured by a plurality of ply cords extending in the tire-width direction. In addition, a plurality of ply cords is arranged side by side in a tire circumferential direction. This ply cord is configured by an insulated organic fiber cord such as polyester or polyamide, or the like, and is covered by rubber.

In the tread 12, at least one ring-shaped steel belt 26 which extends in a circumferential direction of the tire is provided in the outer side in the tire-radial direction of the carcass ply 23. The steel belt 26 is configured by a plurality of steel cords covered by rubber. By providing the steel belts 26, the rigidity of the tire is ensured, and the contact state of the road surface with the tread 12 improves. In the present embodiment, although two layers of steel belts 261, 262 are provided, the number of layered steel belts 26 is not limited thereto.

At the outer side in the tire-radial direction of the steel belt 26, a cap ply 27 serving as a belt reinforcement layer is provided. The cap ply 27 is configured from an insulating organic fiber layer such as of polyamide fibers, and is covered by rubber. By providing the cap ply 27, it is possible to achieve an improvement in durability and a reduction in road noise while travelling.

The tread rubber 28 is provided at the outer side in the tire-radial direction of the cap ply 27. A tread pattern (not illustrated) is provided to the outer surface of the tread rubber 28, and this outer surface serves as a contact patch which contacts with the road surface.

In the bead 11, side wall 13 and tread 12, an inner liner 29 serving as a rubber layer constituting an inside wall surface of the tire 1 is provided to a tire inner cavity side of the carcass ply 23. The inner liner 29 is configured by air permeation resistant rubber, whereby the air inside the tire inner cavity is prevented from leaking to outside.

In the side wall 13, the side wall rubber 30 constituting the outer wall surface of the tire 1 is provided to the outer side in the tire-width direction of the carcass ply 23. This side wall rubber 30 is a portion which bends the most upon the tire 1 exhibiting a cushioning action, and usually flexible rubber having fatigue resistance is adopted therein.

A chafer 31 is provided on the inner side in the tire-radial direction of the carcass ply 23 provided around the bead core 21 of the bead 11. The chafer 31 also extends to the outer side in the tire-width direction of the ply folding part 25 of the carcass ply 23, and rim strip rubber 32 is provided at the outer side in the tire-width direction thereof and the inner side in the tire-radial direction. The outer side in the tire-width direction of this rim strip rubber 32 connects with the side wall rubber 30.

An RFID tag 40 is embedded as an electrical component in the tire 1 of the present embodiment. The RFID tag 40 is a passive transponder equipped with an RFID chip and an antenna for performing communication with external equipment, and performs wireless communication with a reader (not illustrated) serving as the external equipment. As the antenna, a coil-shaped spring antenna, plate-shaped antenna, and various types of rod-shaped antennas can be used. For example, it may be an antenna formed by printing a predetermined pattern on a flexible substrate. In a storage part inside the RFID chip, identification information such as a manufacturing number and part number is stored.

FIG. 2 is an enlarged cross-sectional view showing around the embedded part of the RFID tag 40.

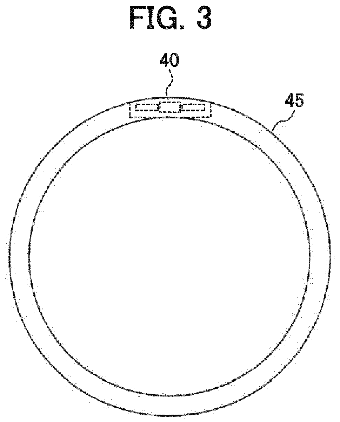

As shown in FIGS. 2 and 3, in the present embodiment, the RFID tag 40 is mounted integrally with the ring-shaped rubber sheet 45, and this ring-shaped rubber sheet 45 is embedded inside the structure of the tire 1, while concentrically arranging with the tire. In addition, in the present embodiment, the ring-shaped rubber sheet 45 equipped with the RFID tag 40 is fixedly set by mounting to the bead filler 22 of tapered tip shape. In other words, the RFID tag 40 is fixedly set between the ply body 24 of the carcass ply 23 and ply folding part 25, along with the ring-shaped rubber sheet 45. The RFID tag 40 is covered by the ring-shaped rubber sheet 45, whereby the RFID tag 40 and ring-shaped rubber sheet 45 become integrated. Herein, the RFID tag 40 may be completely covered by the ring-shaped rubber sheet 45, or may be covered in a state in which a part is exposed. In the case of completely covering, the ring-shaped rubber sheet 45 may be configured by two rubber sheets, and the RFID tag 40 may be interposed by the two rubber sheets.

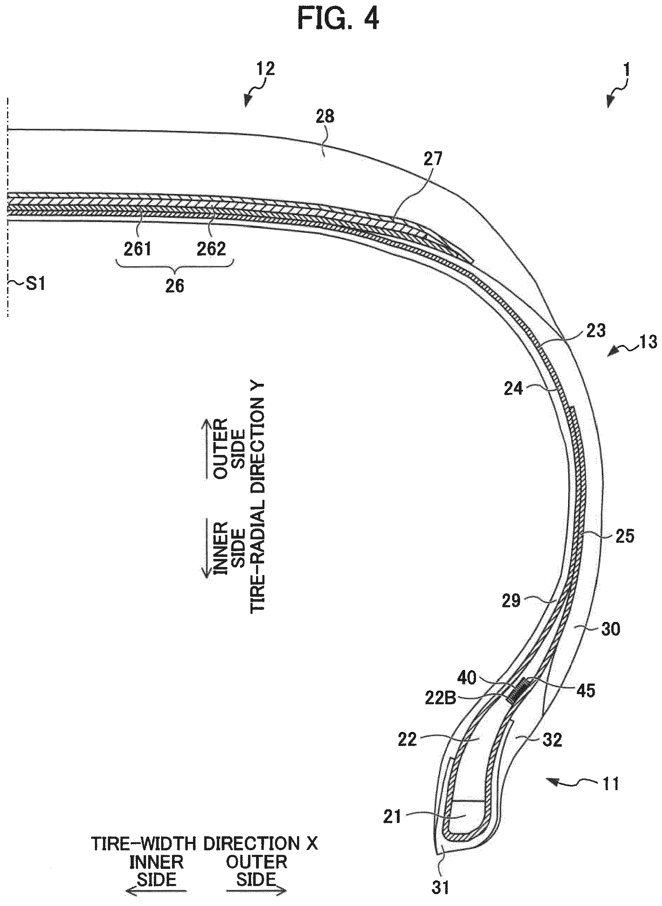

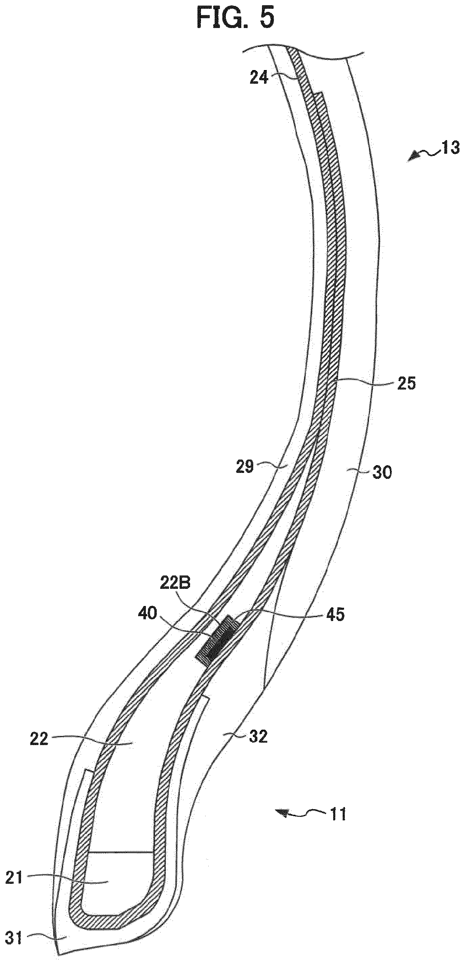

It should be noted that it may be configured so that the ring-shaped rubber sheet 45 including the RFID tag 40, for example, pastes to the surface of the bead filler 22 of tapered tip shape during the manufacture of the tire 1, as shown in FIGS. 1 and 2, and is provided by fitting into the ring-shaped recess 22B formed in advance in the bead filler 22 of tapered tip shape, as shown in FIGS. 4 and 5. It should be noted that, although a recess extending in the circumferential direction is formed in the surface of the bead filler 22 in the examples of FIGS. 4 and 5, this ring-shaped recess 22B may be formed using an appropriate means such as forming the bead filler 22 using extrusion molding. In other words, the bead filler 22 may be an extrusion molded article in which a recess was extrusion molded.

Herein, the RFID tag 40 is mounted before the vulcanization process in the manufacturing process of the tire 1. The present invention mounts the ring-like rubber sheet 45 which has been integrated with the RFID tag 40 to the ply folding part 25 (or ply body 24) of the carcass ply 23 prior to the coating rubber being vulcanized. At this time, since the coating rubber of the carcass ply 23 is in a state of raw rubber prior to vulcanization, it is possible to paste the ring-like rubber sheet 45 which has been integrated with the RFID tag 40 to the carcass ply 23 employing the adhesiveness thereof. Alternatively, it may be pasted using an adhesive or the like. After pasting the ring-like rubber sheet 45 which has been integrated with the RFID tag 40 to the carcass ply 23, the ring-like rubber sheet 45 which has been integrated with the RFID tag 40 is interposed by the carcass ply 23 and bead filler 22. Subsequently, the green tire in which the respective constituent members including the RFID tag 40 are assembled is vulcanized in a vulcanization step to manufacture the tire 1. In this way, in the present embodiment, since it is possible to paste the ring-shaped rubber sheet 45 which has been integrated with the RFID tag 40 to the carcass ply 23 covered by the raw rubber having rigidity and having adhesiveness during tire manufacture, the assembly work of the RFID tag 40 in the manufacturing process of the tire is easy.

In addition, in the present embodiment, for example, at a desired position of the bead filler prior to vulcanization, it is possible to appropriately paste the ring-shaped rubber sheet 45 which has been integrated with the RFID tag 40 concentrically with the tire 1 using the adhesiveness of the raw rubber. Furthermore, by also establishing the rubber sheet 45 as raw rubber prior to vulcanization, it is possible to more easily paste using the adhesiveness of the rubber sheet 45 itself. It should be noted that, in FIGS. 1 and 2, the ring-shaped rubber sheet 45 is pasted along the tire-radial direction outside end 22A of the bead filler 22, i.e. along the outer circumferential part of the bead filler 22 when viewing from the outer side in the tire-width direction. Consequently, the pasting workability is favorable. Subsequently, the ring-shaped rubber sheet 45 which is integrated with the RFID tag 40 is interposed by the bead filler 22 and carcass ply 23. Subsequently, the tire 1 is manufactured by conducting the aforementioned vulcanization step. In the above way, in the present embodiment, the ring-shaped rubber sheet 45 which is integrated with the RFID tag 40 is arranged between the carcass ply 23 and bead filler 22 as a plurality of ring-shaped tire structures constituting the tire 1.

By pasting the RFID tag 40 covered by the ring-shaped rubber sheet 45 at a desired position of the bead filler 22 in this way, the RFID tag 40 comes to be sandwiched between the ply folding part 25 and bead filler 22 (or between the ply body 24 and bead filler 22). In this case, also under the condition of the RFID tag 40 receiving stress by the ply body 24 and ply folding part 25 moving relatively, the RFID tag 40 is protected by the presence of the ring-shaped rubber sheet 45. Consequently, the durability of the RFID tag 40 further improves.

In addition, since the RFID tag 40 is embedded in the ring-shaped rubber sheet 45, there is no longer a level difference at the circumference of the RFID tag 40 during manufacture such as the vulcanization process, and it becomes possible to prevent problems such as uniformity deterioration. Consequently, even in a case of embedding the RFID tag 40 in the tire 1, it becomes possible to provide with certainty the tire 1 having high confidence which is high quality.

Furthermore, as shown in FIGS. 4 and 5, in the case of providing the ring-shaped recess 22B to the bead filler 22 by using extrusion molding or the like, and arranging to fit the ring-shaped rubber sheet 45 and RFID tag 40 in the ring-shaped recess 22B, there will more reliably not be a level difference. It thereby becomes possible to prevent problems such as uniformity deterioration.

Herein, since the bead core 21 is a metal member having a particularly high possibility of adversely influencing the communication due to being formed in a ring shape by laminating and winding the bead wire made of metal, by configuring in the above-mentioned way, the RFID tag 40 of the present embodiment is arranged at a position sufficiently distanced from the bead core made of metal, and it is possible to ensure suitable communication performance.

Furthermore, the RFID tag 40 of the present embodiment is arranged at a position far from the bead core 21 which is made of metal, and far from the steel belt 26; therefore, from this point as well, the RFID tag 40 is hardly adversely influenced by components made of metal, and it is possible to maintain more suitable communication performance.

In addition, in the RFID tag 40 of the present embodiment, the movement is restricted by the fiber layer constituting the carcass ply 23, and thus hardly receives influences such as distortion of the tire during travel. Consequently, it is possible to improve the durability of the RFID tag 40 by way of existing components, without using additional components.

Furthermore, according to the present embodiment, since the RFID tag 40 is provided within the bead filler 22 surrounded by the fiber layer constituting the carcass ply 23, and since the distance from the outer wall surface of the tire 1 until the RFID tag 40 is far, the RFID tag 40 is protected even if shock acts on the tire. In other words, the shock protection property of the RFID tag 40 is sufficiently ensured.

On the other hand, if taking account of preventing stress concentration between the carcass ply 23 and RFID tag 40 due to the differences in expansion/contraction amount between constituent members of the tire during manufacture such as the vulcanization process, and preventing stress concentration between the carcass ply 23 and RFID tag 40 generated by distortion of the tire during use, for example, a rubber sheet or fiber layer may be provided as a protective member to only the outer side in the tire-width direction of the RFID tag 40, i.e. side of the carcass ply 23. In the case of providing the protective member 43 to only one side of the RFID tag 40, it is possible to make the overall thickness thinner.

It should be noted that the ring-shaped rubber sheet 45 and RFID tag 40 may be arranged within the tire structure at another portion such as between the carcass ply 23 and inner liner 29, or between the carcass ply 23 and side-wall rubber 30. In other words, the plurality of ring-shaped tire structures interposing the ring-shaped rubber sheet 45 which is integrated with the RFID tag 40 and constitute the tire are not limited to the bead filler 22 and carcass ply 23, and may be the inner liner 29, side-wall rubber 30, etc.

In addition, in the present embodiment, although the RFID tag 40 is embedded in the tire 1 as an electronic component, the electronic component embedded in the tire 1 is not limited to the RFID tag 40. For example, it may be various electronic components such as a sensor which carries out wireless communication. There is a possibility of the performance of the electronic component declining from the influence of external shock and stress in the vicinity thereof. Consequently, even in the case of embedding various electronic components in a tire, it is possible to obtain the effects of the present invention. For example, the electronic component may be a piezoelectric element or strain sensor.

According to the tire 1 of the present embodiment, the following effects are exerted.
(1) The tire 1 according to the present embodiment includes the bead filler 22 and carcass ply 23 as a plurality of ring-shaped tire structures constituting the tire, and a ring-shaped rubber sheet 45 which is integrated with the RFID tag 40, and the ring-shaped rubber sheet 45 which is integrated with the RFID tag 40 is arranged between the bead filler 22 and carcass ply 23.
   It thereby becomes possible to prevent problems such as uniformity deterioration during manufacturing such as the vulcanization process, without a level difference arising by providing the RFID tag 40. Consequently, even in a case of embedding the RFID tag 40 in the tire 1, it becomes possible to provide with certainty the tire 1 having high confidence which is high quality. In addition, it is possible to appropriately paste the RFID tag 40 covered by the rubber sheet 45 to a desired position of the bead filler 22 prior to vulcanization, using the adhesiveness of raw rubber. In addition, by also establishing the rubber sheets 45 as raw rubber prior to vulcanization, it is possible to more easily paste by employing the adhesiveness of the rubber sheet 45 itself as well.
(2) The tire 1 according to the present embodiment includes the pair of beads 11 having the bead core 21 and bead filler 22 extending to an outer side in the tire-radial direction of the bead core 21, and the ring-shaped rubber sheet 45 which is integrated with the RFID tag 40 is provided by pasting to the bead filler 22 as a ring-shaped tire structure.
   It is thereby possible to protect the RFID tag 40 by existing components, without using additional components. In addition, the bead filler 22 is a rubber member having higher modulus than the surrounding rubber members; therefore, the motion of the RFID tag 40 is suppressed by this bead filler 22, and the durability of the RFID tag 40 improves. Consequently, by providing inside of the bead filler 22, it becomes possible to suitably ensure manufacturability, communication functionality, etc., and embed the RFID tag 40 in the tire 1.
(3) In the tire 1 according to the present embodiment, the ring-shaped recess 22B which extends in the circumferential direction is formed at the surface of the bead filler 22, and the ring-shaped rubber sheet 45 is provided to this ring-shaped recess 22B.
   It is thereby possible to more reliably prevent a level difference from arising by providing the RFID tag 40, whereby it becomes possible to prevent problems such as uniformity deterioration during manufacture such as the vulcanization process. Consequently, even in a case of providing the RFID tag 40 to the tire 1, it becomes possible to provide with certainty the tire 1 having high confidence which is high quality. In addition, since the RFID tag 40 is provided along with the rubber sheet 45 to fit into the bead filler 22 having a higher modulus than the surrounding rubber members, it is possible to further improve the durability.
(4) In the tire 1 according to the present embodiment, the bead filler 22 including the ring-shaped recess 2B is molded using extrusion molding. It is thereby possible to precisely form the bead filler 22 including the ring-shaped recess 22B efficiently.
(5) The manufacturing method of the tire 1 according to the present embodiment includes a step of arranging the ring-shaped rubber sheet 45 which is integrated with the RFID tag 40 that is an electronic component, at the bead filler 22 which extends to an outer side in the tire-radial direction of the bead core 21. It thereby becomes possible to obtain similar operational effects as the above-mentioned (2).
(6) The manufacturing method of a tire 1 according to the present embodiment, the tire 1 includes a bead 11 having a bead core 21 and a bead filler 22 extending to an outer side in a tire-radial direction of the bead core 21, wherein the method further comprises the steps of: forming a recess 22B extending in a circumferential direction in a surface of the bead filler 22; and disposing, wherein the step of disposing is a step of disposing a ring-shaped rubber 45 which is integrated with an electronic component 40, in the recess 22B extending in the circumferential direction.

It should be noted that, although the tire of the present invention can be adopted as various types of tires such as for cars, light trucks, trucks and buses, it is particularly suitable as a tire for passenger cars. It should be noted that the present invention is not to be limited to the above-mentioned embodiments, and that even when carrying out modifications, improvements, etc. within a scope capable of achieving the object of the present invention, it is encompassed by the scope of the present invention, which is limited only by the scope of the appended claims.

### EXPLANATION OF REFERENCE NUMERALS

1 tire
11 bead
12 tread
13 side wall
21 bead core
22 bead filler
22B ring-shaped recess
23 carcass ply
24 ply body
25 ply folding part
26 steel belt
27 cap ply
28 tread rubber
29 inner liner
30 side-wall rubber
31 chafer
32 rim strip rubber
40 RFID tag
45 ring-shaped rubber sheet

## Claims

1. A tire (1) comprising a plurality of ring-shaped tire structures (22, 23) which constitute a tire (1), and a ring-shaped rubber sheet (45) which is integrated with an electronic component (40), **characterised in that** the ring-shaped rubber sheet (45) which is integrated with the electronic component (40) is disposed between the plurality of ring-shaped tire structures (22, 23).

2. The tire (1) according to claim 1, further comprising a bead (11) having a bead core (21) and a bead filler (22) which extends to an outer-side in a tire-radial direction of the bead core (21),
wherein the rubber sheet (45) is provided to the bead filler (22) as the ring-like tire structure.

3. The tire (1) according to claim 2, wherein a recess (22B) extending in a circumferential direction is formed in a surface of the bead filler (22), and
wherein the ring-shaped rubber sheet (45) is provided in the recess (22B).

4. The tire (1) according to claim 3, wherein the bead filler (22) provided with the recess (22B) is molded using an extrusion molding process.

5. A manufacturing method of the tire (1) according to any preceding claim, comprising a step of disposing a ring-shaped rubber sheet (45) which is integrated with an electronic component (40) at a bead filler (22) which extends to an outer side in a tire-radial direction of a bead core (21).

6. The manufacturing method of a tire (1) according to claim 5,
wherein the tire (1) includes a bead (11) having a bead core (21) and a bead filler (22) extending to an outer side in a tire-radial direction of the bead core (21),
wherein the method further comprises the steps of:
forming a recess (22B) extending in a circumferential direction in a surface of the bead filler (22); and
disposing, wherein the step of disposing is a step of disposing a ring-shaped rubber (45) which is integrated with an electronic component (40), in the recess (22B) extending in the circumferential direction.

## Patentansprüche

1. Reifen (1), der eine Vielzahl von ringförmigen Reifenstrukturen (22, 23), die einen Reifen (1) bilden, und eine ringförmige Gummibahn (45) umfasst, die mit einem elektronischen Bauelement (40) integriert ist,
**dadurch gekennzeichnet, dass** die ringförmige Gummibahn (45), die mit dem elektronischen Bauelement (40) integriert ist, zwischen der Vielzahl von ringförmigen Reifenstrukturen (22, 23) angeordnet ist.

2. Reifen (1) nach Anspruch 1, der ferner einen Wulst (11) umfasst, der einen Wulstkern (21) und einen Kernreiter (22) aufweist, der sich in einer radialen Reifenrichtung des Wulstkerns (21) zu einer Außenseite erstreckt,
wobei die Gummibahn (45) dem Kernreiter (22) als die ringartige Reifenstruktur bereitgestellt ist.

3. Reifen (1) nach Anspruch 2, wobei eine Aussparung (22B), die sich in einer Umfangsrichtung erstreckt, in einer Oberfläche des Kernreiters (22) gebildet ist, und
wobei die ringförmige Gummibahn (45) in der Aussparung (22B) bereitgestellt ist.

4. Reifen (1) nach Anspruch 3, wobei der Kernreiter (22), der mit der Aussparung (22B) versehen ist, unter Verwendung eines Extrusionsprozesses geformt wird.

5. Verfahren zur Herstellung des Reifens (1) nach einem der vorhergehenden Ansprüche, das einen Schritt des Anordnens einer ringförmigen Gummibahn (45), die mit einem elektronischen Bauelement (40) integriert ist, an einem Kernreiter (22) umfasst, der sich in einer radialen Reifenrichtung eines Wulstkerns (21) zu einer Außenseite erstreckt.

6. Verfahren zur Herstellung eines Reifens (1) nach Anspruch 5,
wobei der Reifen (1) einen Wulst (11) umfasst, der einen Wulstkern (21) und einen Kernreiter (22) aufweist, der sich in einer radialen Reifenrichtung des Wulstkerns (21) zu einer Außenseite erstreckt,
wobei das Verfahren ferner die folgenden Schritte umfasst:
Bilden einer Aussparung (22B), die sich in eine Umfangsrichtung in einer Oberfläche des Kernreiters (22) erstreckt; und
Anordnen, wobei der Schritt des Anordnens ein Schritt des Anordnens eines ringförmigen Gummis (45), der mit einem elektronischen Bauelement (40) integriert ist, in der Aussparung (22B) ist, die sich in der Umfangsrichtung erstreckt.

## Revendications

1. Pneu (1) comportant une pluralité de structures de pneu en forme d'anneau (22, 23) qui constituent un pneu (1) et une feuille de caoutchouc en forme d'anneau (45) qui est intégrée dans un composant électronique (40),
**caractérisé en ce que** la feuille de caoutchouc en forme d'anneau (45) qui est intégrée dans le composant électronique (40) est disposée entre la pluralité de structures de pneu en forme d'anneau (22, 23).

2. Pneu (1) selon la revendication 1, comportant en outre une tringle (11) ayant un cœur de tringle (21) et un rembourrage de tringle (22) qui s'étend jusqu'à un côté externe dans une direction radiale de pneu du cœur de tringle (21),
dans lequel la feuille de caoutchouc (45) est fournie sur le rembourrage de tringle (22) en tant que structure de pneu en forme d'anneau.

3. Pneu (1) selon la revendication 2, dans lequel un évidement (22B) s'étendant dans une direction circonférentielle est formé dans une surface du rembourrage de tringle (22) et
dans lequel la feuille de caoutchouc en forme d'anneau (45) est prévue dans l'évidement (22B).

4. Pneu (1) selon la revendication 3, dans lequel le rembourrage de tringle (22) doté de l'évidement (22B) est moulé à l'aide d'un processus de moulage par extrusion.

5. Procédé de fabrication du pneu(1) selon l'une quelconque des revendications précédentes, comportant une étape de disposition d'une feuille de caoutchouc en forme d'anneau (45) qui est intégrée dans un composant électronique (40) au niveau d'un rembourrage de tringle (22) qui s'étend vers un côté externe dans une direction radiale de pneu d'un cœur de tringle (21).

6. Procédé de fabrication d'un pneu (1) selon la revendication 5,
dans lequel le pneu (1) inclut une tringle (1) ayant un cœur de tringle (21) et un rembourrage de tringle (22) s'étendant jusqu'à un côté externe dans une direction radiale de pneu du cœur de tringle (21),
dans lequel le procédé comporte en outre les étapes de :
formation d'un évidement (22B) s'étendant dans une direction circonférentielle dans une surface du rembourrage de tringle (22) ; et
disposition, dans lequel l'étape de disposition est une étape de disposition d'un caoutchouc en forme d'anneau (45) qui est intégré dans un composant électronique (40), dans l'évidement (22B) s'étendant dans la direction circonférentielle.
